(19)

Europäisches
Patentamt
European
Patent Office
Office européen
des brevets

(11) **EP 1 860 794 B1**

(12) **EUROPÄISCHE PATENTSCHRIFT**

(45) Veröffentlichungstag und Bekanntmachung des Hinweises auf die Patenterteilung:
**27.01.2010 Patentblatt 2010/04**

(51) Int Cl.:
***H04B 7/185*** *(2006.01)*

(21) Anmeldenummer: **07009364.6**

(22) Anmeldetag: **10.05.2007**

(54) **Verfahren zur Ressourcenzuteilung in einem interaktiven Satellitenfunknetz-Multimediasystem**

Method for resource allocation in an interactive satellite mobile wireless multimedia system

Procédé destiné à la distribution de ressources dans un système multimédia interactif en réseau radio par satellite

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **26.05.2006 DE 102006025037**

(43) Veröffentlichungstag der Anmeldung:
**28.11.2007 Patentblatt 2007/48**

(73) Patentinhaber: **DLR Deutsches Zentrum für Luft- und Raumfahrt e.V.**
**51147 Köln (DE)**

(72) Erfinder: **Kißling, Christian**
**81549 München (DE)**

(74) Vertreter: **von Kreisler Selting Werner**
**Patentanwälte**
**P.O. Box 10 22 41**
**50462 Köln (DE)**

(56) Entgegenhaltungen:
FR-A- 2 874 147     US-A1- 2004 252 725
US-A1- 2007 097 852

- **NIEBLA C P ET AL: "Delay Compensation Strategies for an Efficient Radio Resource Management in DVB-S2 Systems" 5. September 2005 (2005-09-05), WIRELESS COMMUNICATION SYSTEMS, 2005. 2ND INTERNATIONAL SYMPOSIUM ON SIENA, ITALY 05-09 SEPT. 2005, PISCATAWAY, NJ, USA,IEEE, PAGE(S) 860-864 , XP010886384 ISBN: 0-7803-9206-X * das ganze Dokument ***
- **"Digital Video Broadcasting (DVB); Interaction channel for satellite distribution systems; Final draft ETSI EN 301 790" April 2005 (2005-04), ETSI STANDARDS, EUROPEAN TELECOMMUNICATIONS STANDARDS INSTITUTE, SOPHIA-ANTIPO, FR , XP014026931 ISSN: 0000-0001 * Absatz [6.6.1.1] * * Absätze [06.7] - [06.8] ***

EP 1 860 794 B1

**Beschreibung**

Die Erfindung betrifft ein Verfahren zur Ressourcenzuteilung in einem interaktiven Satellitenfunknetz-Multimediasystem mit Zuweisung von Zeitschlitzen im mit Multi-Frequency Time Division Multiple Access-Technik, abgekürzt MF-TDMA, arbeitenden Rückwärtskanal mittels eines Ressourcenzuteilungsmanagers, der alle eintreffenden Anforderungen, die von Entitäten ausgesendet werden, die eine Übertragung von Daten über das Satellitenfunknetz zu anderen Entitäten oder einer zentralen Überleiteinrichtung wünschen, zur Zuteilung von Bandbreite unter Berücksichtigung von Eigenschaften und Forderungen beinhaltenden Informationen verwaltet und einen den Informationen gehorchenden Burst-Zeitplan berechnet.

Das durch die vorliegende Erfindung angesprochene Problem ergibt sich aus dem folgenden Zusammenhang: Wenn Daten im Rückwärtskanal einer Satellitenfunkverbindung übertragen werden, müssen die verfügbaren Ressourcen verwaltet, verteilt und deren Ausnutzung optimiert werden. Während dies erfolgt, müssen mehrere Randbedingungen erfüllt werden, wie z.B. die Erlangung von QoS(Quality of Service)-Kriterien (Verzögerung, Verzögerungsjitter, Fallenlassen usw.), Neutralität bei der Bandbreitenverteilung und Kanalbedingungen des Übertragungskanals. Die Anwendung von ACM (Adaptive Coding and Modulation) als Schwundminderungstechnik (Fade Mitigation Technique; FMT) erlaubt das Maximieren der Verwendung der verfügbaren Bandbreite durch Wählen einer Kombination von Codierrate und Modulationsniveau, wodurch die Bitfehlerrate für das tatsächliche Signal/Rausch-Verhältnis (SNIR; Signal to Noise Interference Ratio) im Übertragungskanal optimiert wird.

"Adaptive Coding and Modulation" (ACM) ist eine Methode der Datenübertragung, bei welcher der Empfänger eine Rückmeldung über die Qualität der empfangenen Daten und damit über die Übertragungskanalbedingungen gibt und darüber die anzuwendende Datencodierung und Datenmodulation des Datenübertragungskanals anpasst.

Da sowohl die durch eine Gruppe von Endgeräten angeforderte Kapazitätsmenge, abhängig von der tatsächlichen Verkehrslast, als auch ihre Kanalzustände über die Zeit variieren, ist es notwendig, die verfügbare Bandbreite unter allen Endgeräten neu zu verteilen, wobei der Kanaleinfluss, z.B. infolge von Regenschwund oder klarem Himmel, im Hinblick auf die angewandte Modulation und Codierung berücksichtigt wird.

Den Anstoß zu dem der Erfindung zu Grunde liegenden Verfahren ergab sich aus dem Gedanken, eine Verbesserung der Ressourcenzuteilung von DVB-RCS (Digital Video Broadcasting-Return Channel via Satellite) zu entwickeln, wobei die erwähnten neuen Methoden der Schwundminderungstechnik verwendet werden sollten.

Wie aus dem Artikel von J. Park, U. Savagaonkar, E. Chong, H. Siegel, S. Jones: "Allocation of QoS connection in MF-TDMA Satellite Systems: A Two-Phase Approach", IEEE Transactions on Vehicular Technology, Vol. 54, No. 1, Januar 2005, hervorgeht, benutzen derzeit die für eine Ressourcenzuteilung verwendeten Verfahren Online-Algorithmen zur Ermittlung der Zuweisung von Endgeräten an die Träger. Jede Anforderung, sogar wenn sie vom gleichen Endgerät ist, wird getrennt behandelt und durch Anwendung eines Algorithmus zugewiesen, der im vorstehend angegebenen Artikel als Reserve Channel with Priority (RCP)-fit bezeichnet wird. Die dieses bekannte Verfahren verwendenden Systeme berücksichtigen nur das Szenario, bei dem Superframes aus Zeitschlitzen bestehen, die alle die gleiche Länge haben, und ohne Berücksichtigung verschiedener Trägersymbolraten. Da der Algorithmus ein Online-Algorithmus ist, werden alle eintreffenden Anforderungen zur Ankunftszeit arbeitet. Diese Systeme schließen sowohl die Möglichkeit von Träger-Hopping als auch die Möglichkeit der Parallelübertragung aus.

Darüber hinaus behandeln diese Systeme nicht die Situation der Überlastung und Konfliktauflösung. Wie dem vorstehend angeführten Artikel zu entnehmen ist, arbeitet der RCP-Algorithmus grundsätzlich folgendermaßen:

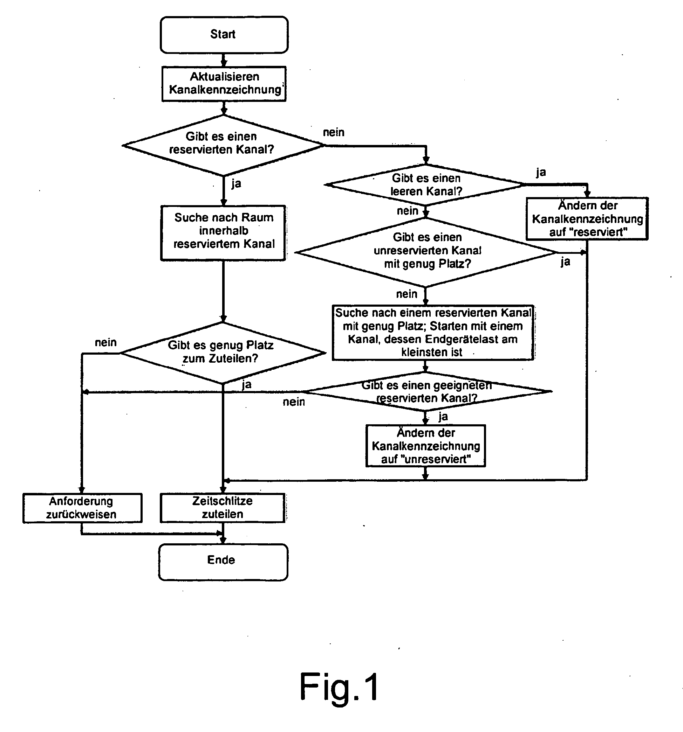

Dieser Algorithmus ist zur Ausführung von Reservierungen für Träger ausgelegt und ist in Flussdiagrammform in Fig.1 schematisch dargestellt. Ist einmal eine Anforderung einem Träger zugewiesen worden, dann ist der ganze Träger für Zuweisungen reserviert, die zum gleichen Endgerät gehören. Wenn kein leerer Träger verfügbar ist, wird nach einem sogenannten unreservierten Kanal gesucht. Dies ist im wesentlichen ein Träger, der vorher reserviert war, aber in den Unreserviert-Zustand gelangte und somit für verschiedene Endgeräte offen ist. Wenn solch ein unreservierter Träger verfügbar ist und genug Platz hat, wird hier die Anforderung zugewiesen. Sonst wird nach einem reservierten Kanal gesucht, der genug Platz hat, wobei mit einem Träger begonnen wird, der die geringste Last hat. Wenn ein solcher reservierter Träger besteht, gilt er als unreserviert und die Anforderung wird zugewiesen.

Aus FR 2 874 147 A1 ist ein Verfahren zum Zuteilen von durch mehrere Nutzer gemeinsam genutzten Ressourcen eines mit MF-TDMA-Technik arbeitenden Satellitenfunk-Kommunikationsnetzes durch Zuweisung von Zeitschlitzen eines dynamisch anpassbaren Zeit/Frequenz-Plans bekannt. Dazu ist in einer Kommunikationsverwaltung eine Einrichtung zur Ressourcenzuteilung für den Rückwärtskanal vorgesehen, die Verarbeitungsmittel zum Bestimmen eines Satzes von Zeit/Frequenz-Plänen in Abhängigkeit von wenigstens einem für eine Nutzerendgerätemenge erforderlichen Symbolratenleistungsumfang und von einer Bestellung einer ausgewählten Menge von Rahmen umfasst, von denen jeder durch einen ausgewählten Satz von gleichartigen Zeitschlitzen im Hinblick auf ihre Übertragung zu jedem der Nutzerendgeräte bestimmt ist. Jedes Mal wenn ein Nutzerendgerät wenigstens einen Leistungsumfang anfordert, bestimmt die Einrichtung zur Ressourcenzuteilung eine Symbolrate unter Berücksichtigung dieses angeforderten Leistungsumfangs und einen entsprechenden, zum Bestimmungszeitpunkt optimalen Zeitschlitz aus den bestimmten Zeit/Frequenz-Plänen, um die Zuteilung der gemeinsam genutzten Ressourcen des Netzes zu optimieren.

Aus EP 1 169 836 B1 ist ein Verfahren zur dynamischen Zeit- und Bandbreitenzuteilung im Rahmen der Verwaltung eines Satelliten-Datennetzwerkes bekannt. Es wird hier eine zentrale Steuerung für eine Anfangszuweisung einer Bandbreite und/oder eines Zeitschlitzes für eine erste Übertragung zur Verfügung gestellt. Außerdem wird noch eine Information bezüglich der Anfangszuweisung an mehrere, geographisch verteilte lokale Steuerungen zur Kopplung an eine oder mehrere Übertragungseinrichtungen zur Verfügung gestellt. Diese Zuweisungsinformation wird im Einzelnen durch eine Außerband-Kommunikationseinrichtung zwischen der zentralen Steuerung und den lokalen Steuerungen zur Verfügung gestellt. Bei diesem bekannten Verfahren wird darüber hinaus eine lokale Steuerung der Bandbreite und/oder des Zeitschlitzes einer zweiten Übertragung über das Netzwerk in Übereinstimmung mit der Zuweisungsinformation ermöglicht.

Aus EP 1 429 473 A2 ist ein dynamisches Ressourcenzuteilungsverfahren bekannt, bei dem Zeitschlitze in einem Rückkanal in MF-TDMA(Multi-Frequency Time Division Multiple Access)-Betriebsweise zugewiesen werden, um einen maximalen Datendurchsatz zu erreichen. Hierzu wird zunächst eine Anforderungsmenge an Ressource entsprechend jedem der Endgeräte während einer Superframe-Periode angesammelt. Die angesammelte Anforderungsmenge an Ressource wird dann in im Superframe enthaltene Rahmenpaare geteilt und eine Ergebnissumme aus der Teilung und Abrundung des Restes der Teilung auf die nächste ganze Zahl als Ressourcenanforderungsmenge festgehalten. Schließlich wird eine optimale Zuteilungsmenge auf der Grundlage der festgehaltenen Ressourcenanforderungsmenge beschlossen und ein Zeitschlitz bestimmt, der jedem der Endgeräte auf der Grundlage der optimalen Zuteilungsmenge zugewiesen werden soll.

Die Voraussetzung von Zeitschlitzen gleicher Länge sowie das Fehlen der Berücksichtigung von Superframes, die Träger mit verschiedenen Symbolraten enthalten, schafft bei den bekannten Verfahren einen Mangel im effizienten Gebrauch der verfügbaren Übertragungsbandbreite. Da die Anwendung eines dynamischen Ressourcenzuteilungsschemas in einem realen Szenario RCSTs (Return Channel Satellite Terminals) mit verschiedenen maximalen Übertragungssymbolraten einschließt, ist es erforderlich zu berücksichtigen, dass Träger auch verschiedene Symbolraten haben können, auch um zu vermeiden, auf eine konstante Zeitschlitzlänge begrenzt zu werden, da dies Flexibilität wegnimmt.

Die Anwendung eines Online-Algorithmus verringert auch die mögliche Leistungsfähigkeit des Systems, da die Zuweisungsentscheidungen nicht auf der vollen Kenntnis der Anforderungssituation beruhen, sondern schrittweise erfolgen. Aus diesem Grund kann die Situation entstehen, dass eine der schrittweisen Entscheidungen zu einer Zuweisung führt, die suboptimal ist, dies aber nur am Ende der Zuweisungsrunde erkannt wird und nicht korrigiert werden kann. Die Verwendung der Bandbreite ist in diesen Fällen suboptimal. Im Fall, dass die verfügbare Bandbreite nicht ausreichend ist, um alle Anforderungen zu bedienen, besteht die verfolgte Strategie darin, die Anforderung fallenzulassen. Dieser Vorgang stellt auch einen Verlust verfügbarer Bandbreite dar und kann Probleme mit der Einhaltung der QoS-Kriterien ergeben, da Datenpakete fallengelassen, d.h. ausgeworfen werden. Ein intelligenter Konfliktentscheidungsmechanismus könnte die Gesamtnützung der Bandbreite sowie die erreichte Neutralität und Einhaltung der QoS-Kriterien optimieren.

Aus dem Artikel C. Párraga Niebla, C. Kissling: "Delay Compensation Strategies for an Efficient Radio Resource Management in DVB-S2 Systems", 5. September 2005, Wireless Communication Systems, 2005, 2nd International Symposium on Siena, IT, 05.-09. Sept. 2005, Piscataway, NJ, USA, IEEE, Seiten 860-864, XP010886384, ISBN: 0-7803-9206-X ist es bekannt, in Verbindung mit einem Funkressourcen-Management bei einem DVB-S2-System, das adaptive Codierung und Modulation (ACM) und damit an die Datenübertragungsrate zu einem Endgerät anpassbare ModCods, d.h. Modulations- und Codierratensätze, zur Maximierung der zeitlichen Übertragungskanaleffizienz für jeden Empfänger verwendet, Störungen hervorrufende Verzögerungen im Satellitenfunksystem zu kompensieren.

Aus "Digital Video Broadcasting (DVB); Interaction channel for satellite distribution systems, Final Draft, ETSI EN 301 790", April 2005, ETSI Standards, European Telecommunications Standards Institute, Sophia-Antipolis, FR, XP014026931, ISSN: 0000-0001 ist es im Zusammenhang mit der Spezifikation zum Digital Video Broadcasting (DVB) für den Rückwärtskanal RCS bekannt, eine statische oder dynamische Ressourcenzuteilung vorzunehmen. Es können danach Zeitschlitze innerhalb eines Superframes im mit MF-TDMA arbeitenden Rückwärtskanal nach den Anforderungen von Endgeräten und damit Bandbreitenressourcen mittels eines Ressourcenzuteilungsmanagers statisch oder dynamisch zugeteilt werden.

In US 2004/252725 A1 ist ein Verfahren zur Unterstützung einer Rahmensynchronisierung in einem digitalen, interaktiven Broadcast-System, z.B. DVB-S, beschrieben. Ein Sender enthält einen Codierer, der ein LDPC(Low Density Parity Check)-Codewort ausgibt. Der Sender enthält auch einen Rahmenmodul, der einen LDPC-codierten Rahmen in Reaktion auf das LDPC-Codewort erzeugt, und fügt an das LDPC-Codewort ein Signalisierungsfeld zum Spezifizieren einer Modulations- und Codierungsinformation an, die dem LDPC-codierten Rahmen zugeordnet ist. Das Signalisierungsfeld ist mit einem Vorwärtsfehlerkorrektur(FEC)-Code codiert und weist einen die Rahmensynchronisierung unterstützenden Rahmenaufbau auf.

Aus US 2007/097852 A1 ist ein Verfahren zum Aufbauen von Übertragungsrahmen mit einem dynamisch abstimmbaren ModCod bekannt, der an die Signalgüte eines Zielendgeräts angepasst wird. Datenpakete, die dem gleichen ModCod zugeordnet sind, können im gleichen Rahmen gesendet werden, obwohl Datenpakete, die höheren ModCods zugeordnet sind, zur Vervollständigung eines Rahmens verwendet werden können, bevor auf den anwendbaren höheren ModCod zum Aufbauen eines nachfolgenden Rahmens umgeschaltet wird.

Aufgabe der vorliegenden Erfindung ist es, ein Verfahren zur Ressourcenzuteilung in einem interaktiven Satellitenfunknetz-Multimediasystem zu schaffen, das für die Übertragung im Rückwärtskanal die Verteilung von Bandbreite unter verschiedenen Endgeräten mit Berücksichtigung von ACM (Adaptive Coding and Modulation) als eine Schwundminderungstechnik, die Erlangung von Grenzen für QoS (Quality of Service) und eine Optimierung von geliefertem Durchsatz und Neutralität verwaltet.

Gemäß der Erfindung, die sich auf ein Verfahren zur Ressourcenzuteilung der eingangs genannten Art bezieht, wird diese Aufgabe dadurch gelöst, dass mittels des statisch oder halbdynamisch betriebenen Ressourcenzuteilungsmanagers entweder ein statisches oder ein halbdynamisches Abbilden (Mapping) von Modulations- und Codierratensätzen, abgekürzt ModCods, in die Zeitschlitze von Superframes vorgenommen wird, wobei beim statischen Abbilden ein ModCod ausgesucht und während der System-Startphase in die Zeitschlitze eines Superframes abgebildet wird und dieses Abbilden dann für eine längere Zeitdauer von ~>10s konstant bleibt und es innerhalb dieser Dauer nicht möglich ist, im Superframe neue ModCods zu wählen, die nicht bereits vorhanden sind, und wobei bei einem halbdynamischen Abbilden ein Satz Superframes mit verschiedenen Zusammensetzungen von ModCods definiert und ein Superframe aus diesem Satz ausgewählt wird und während der System-Startphase ein ausgesuchter ModCod in die Zeitschlitze dieses Superframes abgebildet wird und dieses Abbilden dann für eine längere Zeitdauer von ~>10s konstant bleibt und es innerhalb dieser Dauer nicht möglich ist, im Superframe neue ModCods zu wählen, die nicht bereits vorhanden sind und sich dann, wenn ein vorher festgelegter Superframe ausgewählt ist, das Verarbeiten wie in der Situation des statischen Abbildens gestaltet, da die Zuweisung von ModCod zu einem Zeitschlitz für einen ausgewählten Superframe statisch ist und dynamisch nicht geändert werden kann, wenn der Burst-Zeitplan aufgebaut ist, dass das Abbilden von ModCods in die Zeitschlitze von Superframes mittels einer Architektur vorgenommen wird, die bei Anwendung des statischen Abbildens mittels eines speziellen Abbildungsalgorithmus die Kapazität der Superframes unter Verwendung von Kapazität in einem niedrigeren Mod-Cod anstelle eines höheren angeforderten ModCods ausnutzt, wobei ein niedrigerer ModCod eine niedrigere Datenübertragungsrate als ein höherer angeforderter ModCod aufweist, und die bei Anwendung des halbdynamischen Abbildens den gleichen Abbildungsalgorithmus wie beim statischen Abbilden anwendet, jedoch mit dem Unterschied, dass der tatsächlich für die Übertragung genutzte Superframe aus einem Satz von vorher festgelegten, an die Übertragungskanaleigenschaften anpassbaren Superframes ausgewählt werden kann, dass die Schaffung des Burst-Zeitplans die Randbedingung berücksichtigt, dass keine Zeitschlitzzuweisung in verschiedenen Trägern zur gleichen Zeit zur Vermeidung einer Parallelübertragung zulässig ist, und dass schließlich der Übertragungsburst-Zeitplan an alle Entitäten übertragen wird.

Der Gesamtprozess der Zuteilung und Verteilung von Ressourcen wird vorteilhaft in einer zentralen Überleiteinrichtung (Gateway) ausgeführt.

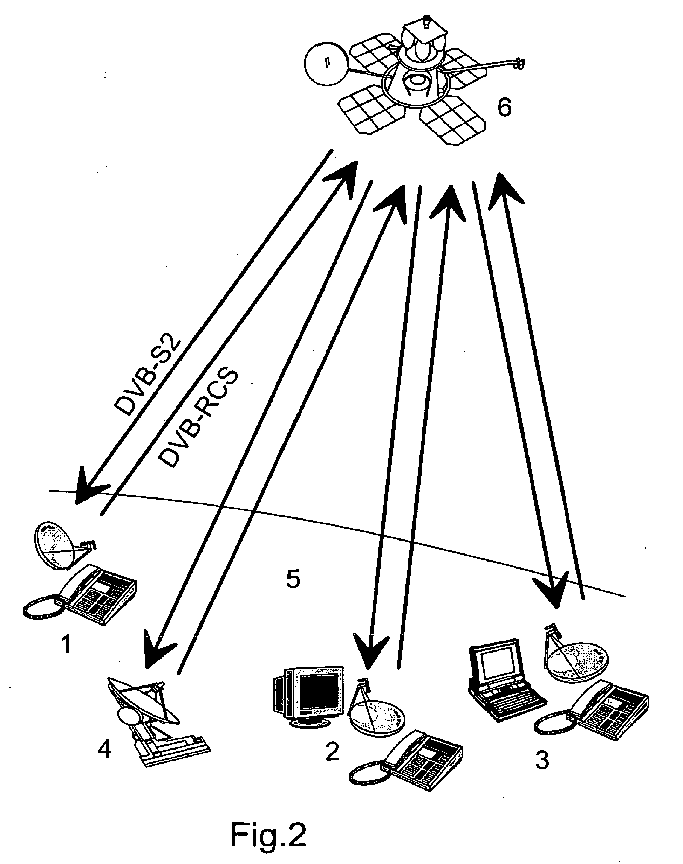

Das System kann einen transparenten oder regenerativen Satelliten enthalten. Infolge der Verfügbarkeit eines Vorwärtskanals (DVB-S2) und eines Rückwärtskanals (DVB-RCS) kann eine Vielzahl verschiedener Dienste, wie z.B. Voice over IP (VoIP), Videostreaming, Audiostreaming, Internet-Verkehr, File Transfer Protocol (FTP), E-Mail usw. geliefert werden. Fig.2 zeigt schematisch ein solches Gesamtsystem mit mehreren jeweils mit einer Parabolantenne ausgerüsteten Endgeräten 1, 2, 3 und einer mit einer Bodenstationsantenne ausgestatteten Überleiteinrichtung (Gateway) 4 am Erdboden 5 sowie einem Kommunikationssatelliten 6.

Da alle diese Dienste verschiedene Forderungen hinsichtlich Quality of Service (QoS), z.B. Verzögerung und Verzögerungsjitter für VoIP und Streaming, haben, muss eine zentrale Entität die verfügbaren Ressourcen im DVB-S2-Vorwärtskanal sowie im DVB-RCS-Rückwärtskanal kontrollieren und verteilen. Der durch die vorliegende Erfindung vorgeschlagene Gedanke spricht die Ressourcenmanagement-Angelegenheiten für den MF-TDMA-Rückwärtskanal an.

Bei der Anwendung von ACM (Adaptive Coding and Modulation) variiert der Bandbreitenbedarf sogar für eine Anforderung einer konstanten Bitrate in Abhängigkeit vom Kanalzustand. Beispielsweise steigt der Bandbreitenbedarf an, wenn sich der Kanalzustand von einer Bedingung bei klarem Himmel zu einem Kanal mit Regenschwund ändert, da die angewandte Codierung hierbei anwächst und das Modulationsniveau abnimmt. Der zweite Grund für eine Änderung der geforderten Bandbreite ist die Schwankung in dem innerhalb eines RCS (Return Channel for Satellite)-Endgeräts erzeugten Gesamtverkehr. Die sich ändernden Bandbreitenbedürfnisse, die durch diese Effekte verursacht werden, müssen für ein MF-TDMA-Schema verwaltet und optimiert werden.

Der Ressourcenzuteiler (RA; Resource Allocator) im Rückwärtskanal unterliegt einigen speziellen Randbedingungen, die zusätzlich berücksichtigt werden müssen. Da ein RCS-Endgerät berücksichtigt wird, das nur einen Modulator enthalten soll, ist es nicht möglich, gleichzeitig auf zwei verschiedenen Trägern zu übertragen. Diese wichtige Einschränkung muss bei der Zuweisung von Zeitschlitzen und Trägern innerhalb des Ressourcenzuteilers (RA) berücksichtigt werden.

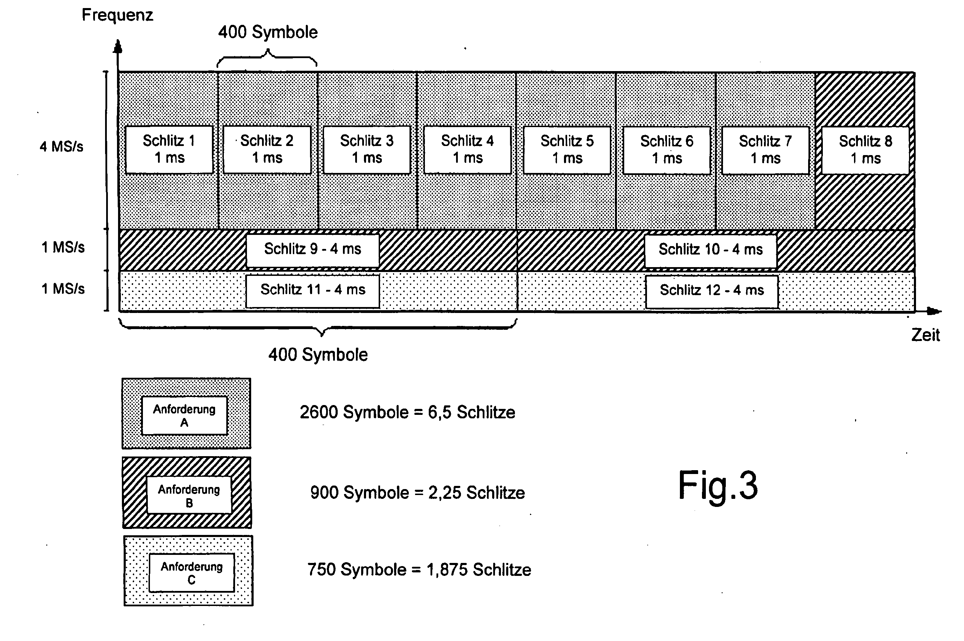

Die Übertragung im RCS-Rückwärtskanal ist in sogenannten Superframes (SF) organisiert. Ein Superframe ist durch eine Frequenz- und Zeitmenge definiert. Der Superframe wird dann in Träger und Zeitschlitze unterteilt. Ein Beispiel für einen Superframe ist in Fig.3 gezeigt.

Das in Fig.3 gezeigte Superframe-Beispiel besteht aus drei Trägern mit verschiedenen Bandbreiten. Sowohl die Dauer der Zeitschlitze als auch die Anzahl von Trägern und die jedem Träger zugewiesene Bandbreite sind völlig flexibel.

Um ACM anzuwenden, ist es notwendig zu bestimmen, welcher Zeitschlitz welche Modulation und Codierung (MC) benutzt. Das Abbilden (Mapping) eines ModCod, d.h. eines Modulations- und Codierratensatzes, auf einen Zeitschlitz kann grundsätzlich entweder statisch, halbdynamisch oder volldynamisch erfolgen.

Das Verfahren nach der vorliegenden Erfindung verwendet entweder das statische (Static Mapping) oder das halbdynamische Abbilden (Semidynamic Mapping).

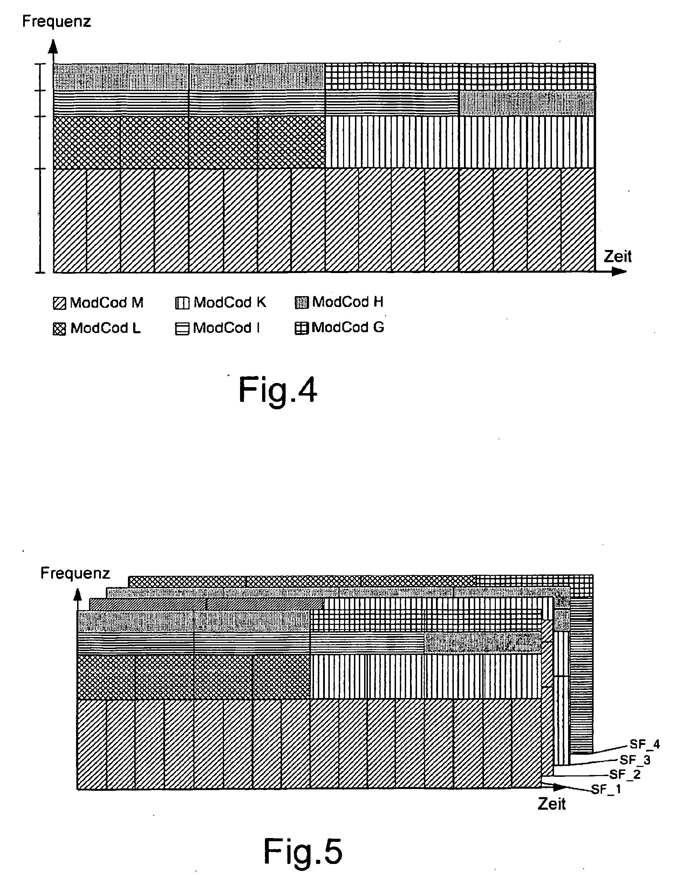

Statisches Abbilden (Static Mapping) bedeutet, einen Modulations- und Codiersatz auszusuchen und ihn während der Startphase des Systems in die Zeitschlitze eines Superframes SF abzubilden. Dieses Abbilden bleibt dann für eine längere Zeitdauer (~>10s) konstant. Innerhalb dieser Dauer ist es nicht möglich, im Superframe SF neue Modulations- und Codiersätze zu wählen, die nicht bereits vorhanden sind. Fig.4 zeigt ein Beispiel eines Superframes, der spezifische, Zeitschlitzen zugewiesene ModCods hat, wobei die ModCod-Zuteilung auf die Schnelle nicht geändert werden kann.

Dadurch entstehen mehrere Herausforderungen, die angesprochen werden müssen:

Es könnte sein, dass ein Endgerät mit einem Kanalzustand und einem zugeordneten Modulations- und Codiersatz, der im statischen Superframe SF nicht vorliegt, Kapazität verlangt. Da die Zusammensetzung des Modulations- und Codiersatzes nicht geändert werden kann, ist gemäß der vorliegenden Erfindung eine Prozedur zum Lösen dieses Problems entwickelt worden.

Ein anderes Problem kann entstehen, wenn mehr Kapazität durch die Endgeräte mit einem spezifischen Modulations- und Codiersatz verlangt wird, als im Superframe SF für diesen Modulations- und Codiersatz vorhanden ist. Auch hierfür wird durch die vorliegende Erfindung eine Prozedur zum Zurechtkommen mit dieser Situation definiert.

Bei einem halbdynamischen Abbilden (Semidynamic Mapping) wird ein Satz Superframes mit verschiedenen Zusammensetzungen von Modulations- und Codiersätzen definiert. Beispielsweise können manche Rahmen Modulations- und Codiersätze für Bedingungen eines ganz klaren Himmels mit nur wenigen niedrigen Modulations- und Codiersätzen (ModCods) für schlechte Kanalzustände enthalten. Andere Superframes können ModCods für hauptsächlich regnerische Kanalzustände mit nur einem kleinen Anteil von Zeitschlitzen mit zugewiesenen ModCods für gute Kanalzustände enthalten. Fig.5 zeigt ein Beispiel für Superframes SF_1 bis SF_4, die sowohl verschiedene ModCods als auch verschiedene Zuweisungen dieser ModCods zu den Zeitschlitzen haben. Da die Situation ähnlich wie beim statischen Abbilden ist, wenn einmal ein Superframe aus dem Satz ausgewählt worden ist, kann der Superframe wie der vorher erwähnte statische Fall behandelt werden.

Dynamisches Abbilden (Mapping) bedeutet im Gegensatz zum statischen und halbdynamischen Abbilden, dass die Zuordnung einer Modulation und Codierung (MC) zu einem Superframe jeweils für einen einzigen Superframe erfolgt. Das Abbilden kann für den folgenden Superframe völlig unterschiedlich sein. Um aus diesem hohen Anpassungsniveau Vorteil zu ziehen, müssen mehrere Dinge berücksichtigt werden.

Wegen der sich ändernden Kapazitätsbedürfnisse und QoS-Notwendigkeiten und um die Rechenkomplexität in einer vernünftigen Höhe zu halten, ist es nützlich zu schätzen, ob alle empfangenen Anforderungen zugeteilt werden können oder nicht.

Die Schätzung ist nicht problemlos infolge der Beschränkung einer Übertragung auf nur einem Träger gleichzeitig und infolge der Tatsache, dass sich die Dauer zeitlich mit der Bandbreite des ausgewählten Trägers ändern kann.

Die Berechnung der benötigten Symbole und der Vergleich mit den verfügbaren Symbolen ist hier nicht ausreichend, da die Kapazitätszuteilung in diskreten Zeitschlitzen organisiert ist. Dies bedeutet, dass es sogar dann, wenn die Anzahl von angeforderten Symbolen geringer als die Anzahl von verfügbaren Symbolen ist, nicht gewährleistet ist, dass die tatsächliche Zuteilung wirklich erfolgen kann.

Sogar dann, wenn die Anzahl der von allen Anforderungen benötigten Schlitze berücksichtigt wird, kann nicht gewährleistet werden, dass alle Anforderungen bedient werden können, und zwar wegen der Randbedingung der verbotenen Parallelübertragung (nur ein Modulator pro Endgerät = nur auf einen Träger kann zu einem Zeitpunkt zugegriffen werden). Dies ist auch in Fig.3 gezeigt, wobei die Anzahl von angeforderten Zeitschlitzen gleich der Anzahl verfügbarer Zeitschlitze ist, aber die Zuweisung, wie sie dort gezeigt ist, nicht ausgeführt werden kann, weil das zu den schraffiert dargestellten Zeitschlitzen gehörende Endgerät nicht auf zwei Trägern zur gleichen Zeit übertragen kann. Solch ein Abbilden muss vermieden werden.

Im Falle, dass die angeforderte Kapazität die verfügbare Kapazität übersteigt, ist es notwendig, ein Zuteilungsschema zu finden, das diesen Konflikt in einer Weise löst, welche sowohl die Durchsatzeffizienz als auch die QoS-Bedürfnisse und die Neutralität der Bandbreitenverteilung berücksichtigt, was durch die vorliegende Erfindung gelungen ist.

Das Verfahren nach der vorliegenden Erfindung lässt sich besonders vorteilhaft im Bereich der mobilen Satellitenfunk-Kommunikation verwenden, wobei die QoS-Kriterien bei der Übertragung eingehalten werden.

Vorteilhafte und zweckmäßige Weiterbildungen des Verfahrens nach der Erfindung sind in den Unteransprüchen angegeben, die sich unmittelbar oder mittelbar auf den Patentanspruch 1 beziehen.

Die Erfindung wird nachfolgend anhand von Zeichnungen im Einzelnen erläutert. Es zeigen:

Fig.1 das bereits vorher erläuterte Flussdiagramm für den bekannten RCP-Algorithmus,

Fig.2 die ebenfalls bereits vorher beschriebene Darstellung eines Satellitenfunk-Multimediasystems mit Vorwärts- und Rückwärtskanälen,

Fig.3 die ebenfalls bereits vorher beschriebene Darstellung eines Beispiels für einen Superframe,

Fig.4 die Darstellung eines Beispiels eines Superframes zur statischen ModCod-Zuweisung,

Fig.5 die Darstellung eines Beispiels eines Satzes von Superframes mit verschiedenen Zuweisungen von ModCods zu Zeitschlitzen für das halbdynamische Abbilden,

Fig.6 eine Flussdiagramm-Darstellung des gemäß der vorliegenden Erfindung verwendeten Algorithmus zur statischen Ressourcenzuteilung,

Fig.7 die Darstellung eines Beispiels mit der Möglichkeit zweier unterschiedlicher Zuweisungen eines ModCods in einem Superframe bei statischem Abbilden, und

Fig.8 in schematischer Darstellung Anwendungsbeispiele für ein entsprechend dem Verfahren nach der Erfindung arbeitendes DVB-S2/RCS-System.

Wie vorher schon erläutert wurde, kann die durch die vorliegende Erfindung vorgeschlagene Architektur sowohl verschiedene Zeitschlitzlängen als auch verschiedene Trägersymbolraten innerhalb eines Superframes behandeln.

Zunächst wird das erfindungsgemäß arbeitende Verfahren unter Anwendung des statischen Abbildens (Mapping) erläutert.

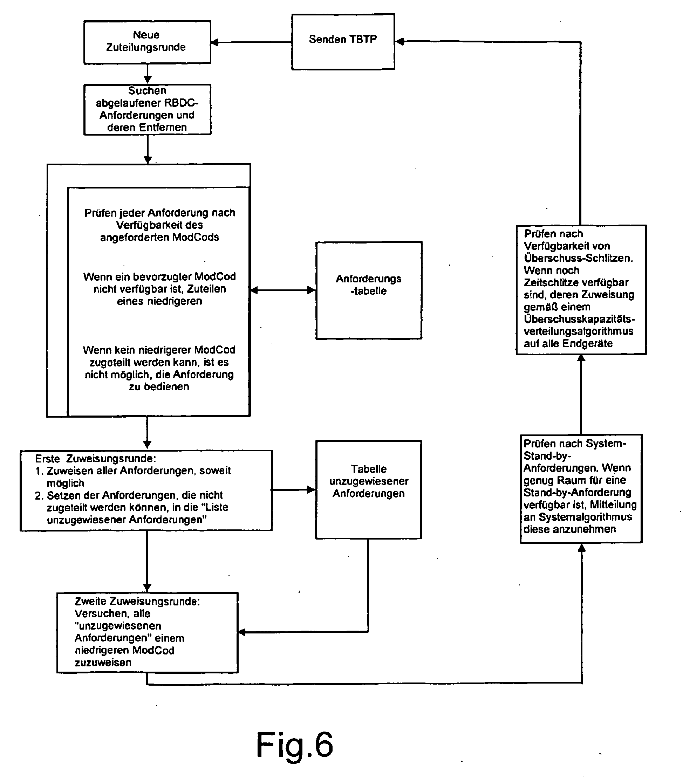

Im Fall eines statischen Superframes, bei dem sowohl die Zeitschlitz- und Frequenzzuteilung als auch die ModCod-Zuweisung zu den Zeitbursts konstant ist, muss der Ressourcenzuweisungsalgorithmus dies berücksichtigen. Das Flussdiagramm der Architektur des statischen Superframe-Ressourcenzuteilungsalgorithmus ist in Fig.6 gezeigt.

Alle eintreffenden Anforderungen werden zu Beginn der nächsten Zuteilungsrunde berücksichtigt. Alle zeitlich abgelaufenen ratenbasierten (RBDC; Rate Based Dynamic Capacity) oder bereits bedienten volumenbasierten Anforderungen (VBDC; Volume Based Dynamic Capacity) werden aus einer Ressourcenanforderungstabelle (RRT; Resource Request Table) entfernt. Für jedes RCST-Endgerät (Return Channel via Satellite-Terminal) wird der optimale ModCod für den Kanalzustand zu der Zeit berechnet, zu der der Superframe durch das RCST-Endgerät verwendet wird.

Wenn die optimalen ModCods für alle Endgeräte bekannt sind, überprüft der Algorithmus, ob alle tatsächlichen ModCods im tatsächlichen Superframe überhaupt vorhanden sind. Wenn ein Endgerät eine Kanalbedingung entsprechend einem ModCod hat, der im statischen Superframe nicht vorhanden ist, wird der ModCod auf einen verfügbaren nächstniedrigen ModCod geändert. Ein höherer ModCod kann im allgemeinen deshalb nicht ausgewählt werden, da dies drastisch gesteigerte Bitfehlerraten ergeben würde.

Für das weitere Vorgehen bei der Ressourcenzuteilung muss ein Kompromiss geschlossen werden, wobei eine Situation berücksichtigt wird, in der N Endgeräte Kapazitäten in der Form von Symbolen anfordern und alle Endgeräte einen Kanalzustand haben, der einem optimalen ModCod M entspricht und darüber hinaus die Kapazität $C_{SF,M}$ des Superframe-Übertragungsbursts für ModCod M kleiner sein soll als die Summe aller angeforderten Kapazitäten $C_i$ entsprechend der Funktion

$$\left( C_{SF,M} < \sum_{1}^{N} C_i \right).$$

In einer solchen Situation werden manche Anforderungen niedrigeren ModCod-Übertragungsbursts zugewiesen, wo aber mehr Kapazität in Form von übertragenen Bits verfügbar ist und dies ohne Stören anderer Anforderungen.

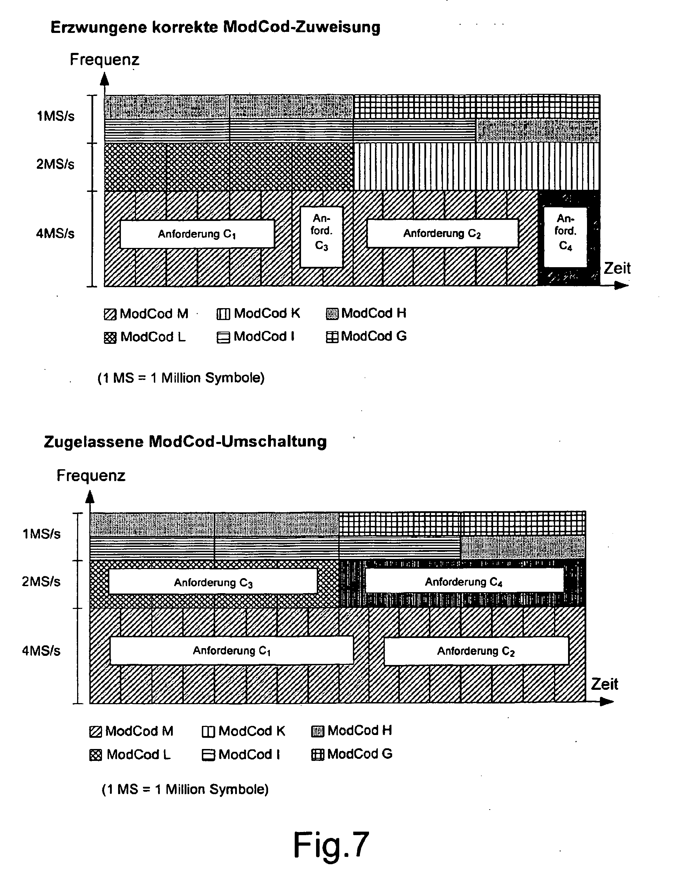

Fig.7 zeigt ein Beispiel für diese zwei Möglichkeiten für einen Superframe, der einen dem ganzen 4MS/s-Träger (MS: Millionen Symbole) zugewiesenen ModCod hat. Im allgemeinen ist aber dieses Beispiel ohne Verlust an Allgemeinheit für andere Superframe-Strukturen gültig, z.B. ebenfalls wo ein ModCod nur Teilen eines Trägers zugewiesen ist. Im oberen Teil der Fig. 7 wird allen Anforderungen Kapazität in demjenigen ModCod zugewiesen, den sie anforderten, sogar wenn dies bedeutet, dass die Größe der Zuweisung kleiner als die angeforderte Menge sein muss. Im unteren Teil von Fig.7 wird jeder Anforderung Kapazität in demjenigen ModCod zugewiesen, mit dem sie angefordert wurde, aber zwei Anforderungen ($C_3$ und $C_4$) werden in einem kleineren ModCod, nämlich L und K (kreuzdiagonal bzw. senkrecht schraffiert) übertragen, da hier Kapazität ungenutzt ist.

Wenn der Algorithmus versucht, alle Anforderungen in ihrem optimalen ModCod unterzubringen, hier im 4MS/s-Schlitz, muss die Menge Symbole, die jedes Endgerät zugeteilt bekommt, reduziert werden, da die verfügbare Symbolkapazität für ModCod kleiner als die benötigten Symbole ist. So bekommt jeder Ablauf nur einen kleineren Anteil, aber erhält seinen bevorzugten ModCod. Der Nachteil ist, dass alle anderen Übertragungsbursts mit verschiedenen, speziell kleineren Mod-Cods ungenutzt bleiben.

Das zweite Beispiel zeigt andererseits, dass es Situationen gibt, in denen alle Anforderungen mit der erforderlichen Kapazität bedient werden können, indem einigen Endgeräten ein unterschiedlicher, vorzugsweise robusterer ModCod zugeteilt wird, hier im dargestellten Beispiel ModCod L und ModCod K. Alle Anforderungen bekommen diejenige Menge Symbole, die sie im bevorzugten ModCod angefordert haben; die Anforderungen C_3 und C_4 bekommen ebenso die Menge Symbole, die sie angefordert haben, müssen aber einen niedrigeren ModCod verwenden. Die Menge von übertragenen Bits ist in diesem Fall größer, so dass der Superframe effizienter genutzt wird.

Im Fall, dass keine Zeitschlitze in kleineren ModCods eine Anforderung vollständig bedienen können, kann die Anforderung beschnitten werden, um sicherzustellen, dass überhaupt Kapazität zugewiesen wird, und um maximalen Gebrauch von der verfügbaren Kapazität zu machen. Zum Anwenden dieser Strategie ist es notwendig sicherzustellen, dass keine anderen Anforderungen durch die Zuweisung einer Anforderung zu einem niedrigeren ModCod beeinträchtigt werden.

So wird in einem ersten Berechnungsschritt die ModCod-Umschaltung noch nicht angewendet, sondern es wird überprüft, welche Anforderungen keinen Raum in ihrem bevorzugten ModCod haben.

Um dies zu erreichen, weist der Ressourcenzuteilungsalgorithmus jede Anforderung einzeln zu. Eine Liste ("Schwarze Liste") verfolgt alle Anforderungen, die nicht zugewiesen werden können, weil es nicht genug Platz in den Übertragungsbursts für den vorteilhaft ausgewählten ModCod gibt.

Dieser Algorithmus führt eine Strategie aus, die dem Zuweisen von Anforderungen mit dem bevorzugten ModCod zuerst Priorität gibt und die Kapazitätsbelegung für alle Anforderungen, die vorher nicht bedient werden konnten, optimiert.

Der zweite Berechnungsschritt weist nun jeder Anforderung aus der "Schwarzen Liste" niedrigere Mod-Cods zu. Der Algorithmus startet mit der Anforderung mit dem höchsten ModCod in der "Schwarzen Liste". Dies erfolgt, weil hohen ModCods mehrere bestimmte kleinere ModCods zugewiesen werden können, aber kleinen ModCods höhere nicht zugewiesen werden können. Einer hohen Anforderung kann eine kleinere zugewiesen werden. Einer Anforderung mit kleinem ModCod kann aber kein größerer ModCod zugewiesen werden. Außerdem gibt diese Strategie Anforderungen Priorität, die einen guten Kanalzustand haben.

Verbleibende Überschusskapazität wird danach unter den Abläufen entsprechend einem Überschusskapazität-Verteilungsalgorithmus verteilt.

Nachfolgend wird das erfindungsgemäß arbeitende Verfahren unter Anwendung des halbdynamischen Abbildens (Mapping) erläutert.

Das halbdynamische Abbilden (Mapping) ist dem statischen Abbilden ziemlich ähnlich. Der Hauptunterschied besteht darin, dass der tatsächliche Superframe aus einem Satz vorher festgelegter Superframes ausgewählt werden kann, anstatt den gleichen Superframe die ganze Zeit verwenden zu müssen. Wenn ein vorher festgelegter Superframe ausgewählt ist, gestaltet sich das Verarbeiten wie in der Situation des statischen Abbildens, da die Zuweisung von ModCod zu einem Zeitschlitz für einen ausgewählten Superframe statisch ist und dynamisch nicht geändert werden kann, wenn der Burst-Zeitplan aufgebaut ist.

Für die Auswahl des Halbdynamik-Superframes, der sich für die tatsächlichen Kanalbedingungen im Strahl am besten eignet, muss berücksichtigt werden, dass niedrigere ModCods immer zugewiesen werden können, höhere jedoch nicht. Die Verteilung der angeforderten ModCod-Mengen wird dann mit den ModCod-Verteilungsstatistiken der verfügbaren Superframes verglichen. Als nächstes wird für jeden ModCod überprüft, ob die angebotene Kapazität kleiner oder größer als die für diesen Superframe angeforderte Kapazität ist.

Aus dem Satz von Superframes, die wenigstens für einen ModCod mehr als die Kapazität oder so viel Kapazität haben wie angefordert, wird der Superframe mit der kleinsten Differenz zur Übertragung in der tatsächlich laufenden Runde ausgewählt.

Sonst wird der Superframe mit der kleinsten Differenz zur Übertragung ausgewählt, unabhängig davon, ob die Differenz nach höheren oder kleineren ModCods geht.

Mit diesem Algorithmus wird die Asymmetrie der ModCod-Zuweisung (niedriger ModCod kann zugewiesen werden, höherer ModCod nicht) für die halbdynamische Superframe-Auswahl beachtet. Nachdem der Superframe ausgewählt ist, verläuft der Algorithmus identisch mit demjenigen des statischen Szenarios, da von da an die ModCods statisch auf Zeitschlitze abgebildet werden. Der weitere Algorithmus beim halbdynamischen Abbilden ist somit der gleiche wie beim statischen Abbilden.

Die beim Verfahren gemäß der vorliegenden Erfindung zur statischen oder halbdynamischen Ressourcenzuteilung in einer MF-TDMA-Verbindung eingesetzten Merkmale werden nachstehend zusammengefasst:

- Eine oder mehrere Entitäten wünschen Daten über ein Satelliten-Funknetz zu anderen Entitäten oder zu einer zentralen Überleiteinrichtung (Gateway) zu übertragen.

- Die geographischen Orte der Entitäten können sich signifikant unterscheiden bzw. ändern. Die erfahrene Kanalqualität ändert sich in der Form von Signal/Rausch-Verhältnis(SNIR)-Änderungen auch mit dem Ort. Beispielsweise hängt sie von der Aktivität anderer Entitäten (Mitnutzerinterferenz), globalen Wetterbedingungen (Regenschwund, klarer Himmel, Wolken) usw. ab.

- Durch die Anwendung von ACM (Adaptive Coding and Modulation) als Schwundminderungstechnik wird versucht, die Übertragungseffizienz in solchen unterschiedlichen Kanälen zu verbessern. In Abhängigkeit von der tatsächlich gewählten Modulation und Codierung ändert sich unter der Voraussetzung einer gleichen Bitratenmenge die Symbolmenge mit den Kanalbedingungen. Die benötigte Symbolmenge kann sowohl bei konstanten Kanalbedingungen als auch dann variieren, wenn sich die benötigte Bitrate der Anwendung ändert.

- Der "statische bzw. halbdynamische Ressourcenzuteilungsmanager" sollte vor allem wegen der Rechenkomplexität in einer zentralen Entität, z.B. in einer Überleiteinrichtung (Gateway), angeordnet werden.

- Der "statische bzw. halbdynamische Ressourcenzuteilungsmanager" sollte in vorteilhafter Weise alle eintreffenden, von den Entitäten ausgesendeten Anforderungen zur Zuteilung von Bandbreite verwalten. Der Zuteilungsprozess muss die folgenden Eigenschaften berücksichtigen:

  - Kanalzustand und optimaler ModCod der anfordernden Entität (gespeichert in einer Datenbank).

  - Von der Entität angeforderter Betrag der Bitrate oder des Bitvolumens und die Dienstklasse der Sitzung, z.B. ratenbasierte Anforderungen oder volumenbasierte Anforderungen, die in einer Datenbank gespeichert sind.

  - QoS-Forderungen für jede Nachfrage, z.B. die Einhaltung von Verzögerungsgrenzen, Minimierung des Verzögerungsjitters, das Datenpaketverlust-Verhältnis usw. ...), die in einer Datenbank gespeichert sind.

  - Maximierung des Durchsatzes und der Verbindungseffizienz.

  - Neutralität der Kanalzuteilung zwischen anfordernden Entitäten.

  - Minimierung der Rechenlast.

- Auf der Grundlage dieser Informationen muss der "statische bzw. halbdynamische Ressourcenzuteilungsmanager" einen Burst-Zeitplan berechnen, der den erwähnten Forderungen gehorcht.

- Die durch die Erfindung vorgeschlagene Architektur behandelt zwei verschiedene Arten von ModCod-Abbildungsverfahren (Mappings), nämlich das statische und halbdynamische Abbilden von ModCods in Zeitschlitze von Superframes.

- Für das statische ModCod-Abbilden wird die Kapazität des Superframes effizient aus den bereits vorher im Einzelnen erläuterten Gründen, nämlich dem Verwenden von Kapazität bei niedrigeren ModCods anstatt Reduzierung der Menge der Zuweisung, ausgenutzt.

- Für das halbdynamische ModCod-Abbilden wird im wesentlichen der gleiche Algorithmus wie für das statische ModCod-Abbilden angewendet. Der Unterschied besteht darin, dass der tatsächlich benutzte Superframe aus einem Satz von vorher festgelegten Superframes ausgewählt werden kann, wobei die Superframes angepasst werden können, z.B. an globale Wetterbedingungen und den Verkehr pro Endgeräterfordernissen.

- Die Schaffung des Burst-Zeitplans muss die Randbedingung berücksichtigen, wonach keine Zeitschlitzzuweisung in verschiedenen Trägern zur gleichen Zeit (Parallelismus) zulässig ist.

- Schließlich wird der Übertragungsburst-Zeitplan an alle Entitäten übertragen.

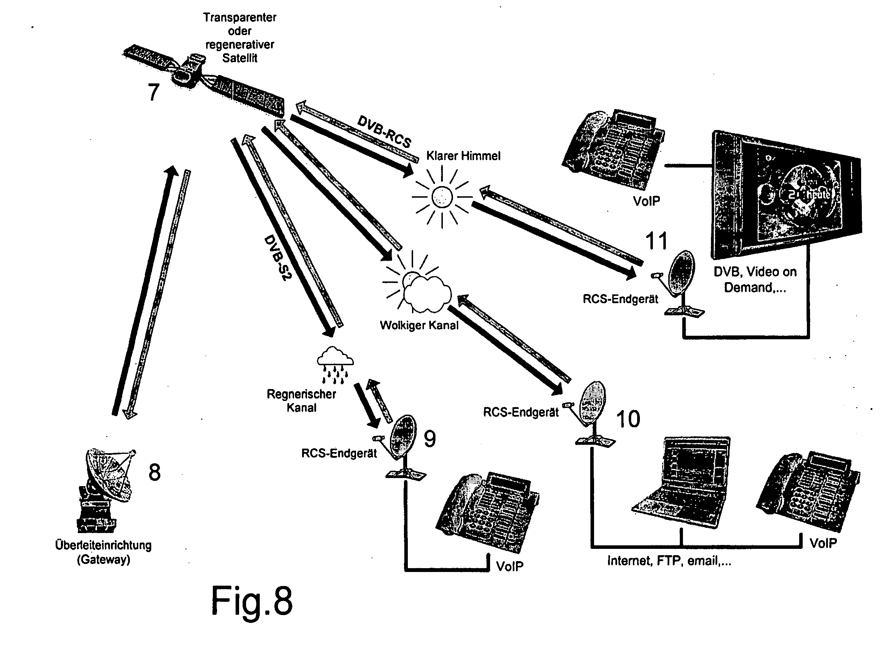

Das Verfahren nach der vorliegenden Erfindung ist vorteilhaft anwendbar in Verbindung mit einer Systemarchitektur, die Vorwärts- und Rückwärtskanalübertragung im Rahmen von DVB-S2 (Vorwärtskanal) und DVB-RCS (Rückwärtskanal) mit Anwendung von ACM (Adaptive Coding and Modulation) als Schwundminderungstechnik verwaltet. Beispiele solcher Anwendungen sind in Fig.8 schematisch dargestellt.

Die Verwendung eines solchen Systems soll Nutzer dazu befähigen, eine Vielfalt interaktiver Dienste, wie z.B. Internet-Verkehr (http), E-Mail, FTP, Video-Conferencing, Audio Conferencing, VoIP usw. zu benutzen, wobei die Ausnutzung der Verbindungskapazitäten optimiert werden soll.

Im Rahmen einer derartigen Anwendung ist ein geostationärer Satellit 7 eingesetzt, um auf der Erdoberfläche einen großen geographischen Bereich zu beleuchten, der in Strahlen unterteilt wird. Eine mit einer Bodenstationsantenne ausgestattete zentrale Entität, z.B. eine Überleiteinrichtung (Gateway) 8, verwaltet die Ressourcenzuteilung für die ebenfalls mit Parabolantennen ausgerüsteten Bodenendgeräte 9, 10, 11 innerhalb eines Strahls.

Die in Fig.8 gezeigte zentrale Überleiteinrichtung 8 enthält den in Fig.6 als Flussdiagramm dargestellten statischen bzw. halbdynamischen Ressourcenzuteilungsmechanismus. Alle Bodenendgeräte 9, 10, 11 innerhalb eines Strahls werden durch den gleichen Übertragungsburst-Zeitplan geplant, der anweist, welchem Endgerät 9, 10, 11 es erlaubt wird, zu welcher Zeit, zu welcher Mittenfrequenz und zu welcher Bandbreite zu senden. Für jede neue Sitzung, z.B. VoIP-Sitzung oder eine Webseite, sendet das Endgerät 9 bzw. 10 bzw. 11 über seinen Rückwärtskanal RCS im Wege über den Satelliten 7 eine Kapazitätsanforderung zur Überleiteinrichtung 8.

In Abhängigkeit von der Anwendungsart wird diese Anforderung eine Anforderung einer ratenbasierten Kapazität RBDC (z.B. VoIP mit konstanter Bitrate) oder einer volumenbasierten Kapazität VBDC (z.B. Internet mit keinen strengen Verzögerungs- und Verzögerungsjitterforderungen, aber spezifischem Volumen) sein. Die Überleiteinrichtung 8 sammelt auch Informationen über die tatsächlichen Kanalzustände aller teilnehmenden Endgeräte 9, 10, 11 und speichert sie in ihren Datenbänken ein. Die Übertragung im Rückwärtskanal RCS wird in Superframes, z.B. von einer Periodenlänge von 50 ms organisiert. Der Ressourcenzuteiler (Ressource Allocator; RA) speichert alle eintreffenden Anforderungen in einer internen Datenbank.

Mittels des im Ressourcenzuteiler entsprechend dem statischen oder halbdynamischen Mapping ablaufenden Algorithmus werden in der vorher bereits ausführlich beschriebenen Arbeitsweise ModCods den Zeitschlitzen der Superframes passend zugewiesen, so dass sich im Satellitenfunknetz eine Ressourcenzuteilung ergibt, die bei der Übertragung im Rückwärtskanal unter den verschiedenen Endgeräten bei Berücksichtigung von ACM für eine optimale Bandbreitenverteilung bei Einhaltung von QoS- und Neutralitäts-Kriterien und damit auch für einen hohen Datenübertragungsdurchsatz insgesamt sorgt.

Eventuelle Überschusskapazität wird in vorteilhafter Weise dann entsprechend einem Überschusskapazität-Verteilungsalgorithmus unter allen Endgeräten auf dem gleichen Träger verteilt, um Träger-Hopping zu vermeiden.

Bezugszeichenliste

| | |
|---|---|
| 1, 2, 3 | Endgerät |
| 4 | Überleiteinrichtung (Gateway) |
| 5 | Erdboden |
| 6 | Kommunikationssatellit |
| 7 | Geostationärer Satellit |
| 8 | Überleiteinrichtung (Gateway) |
| 9, 10, 11 | Bodenendgeräte mit DVB-RCS-Kanal |
| DVB-RCS | Digital Video Broadcasting-Return Channel for Satellite |
| DVB-S2 | Digital Video Broadcasting-Satellite 2 |

**Patentansprüche**

1. Verfahren zur Ressourcenzuteilung in einem interaktiven Satellitenfunknetz-Multimediasystem mit Zuweisung von Zeitschlitzen im mit Multi-Frequency Time Division Multiple Access-Technik, abgekürzt MF-TDMA, arbeitenden Rückwärtskanal mittels eines Ressourcenzuteilungsmanagers, der alle eintreffenden Anforderungen, die von Entitäten ausgesendet werden, die eine Übertragung von Daten über das Satellitenfunknetz zu anderen Entitäten oder einer zentralen Überleiteinrichtung wünschen, zur Zuteilung von Bandbreite unter Berücksichtigung von Eigenschaften und Forderungen beinhaltenden Informationen verwaltet und einen den Informationen gehorchenden Burst-Zeitplan berechnet, **dadurch gekennzeichnet, dass** mittels des statisch oder halbdynamisch betriebenen Ressourcenzuteilungsmanagers entweder ein statisches oder ein halbdynamisches Abbilden (Mapping) von Modulations- und Codierratensätzen, abgekürzt ModCods, in die Zeitschlitze von Superframes vorgenommen wird, wobei beim statischen Abbilden ein ModCod ausgesucht und während der System-Startphase in die Zeitschlitze eines Superframes abgebildet wird und dieses Abbilden dann für eine längere Zeitdauer von ∼>10s konstant bleibt und es innerhalb dieser Dauer nicht möglich ist, im Superframe neue ModCods zu wählen, die nicht bereits vorhanden sind, und wobei bei einem halbdynamischen Abbilden ein Satz Superframe mit verschiedenen Zusammensetzungen von ModCods definiert und ein Superframe aus diesem Satz ausgewählt wird und während der System-Startphase ein ausgesuchter ModCod in die Zeitschlitze dieses Superframes abgebildet wird und dieses Abbilden dann für eine längere Zeitdauer von ∼>10s konstant bleibt und es innerhalb dieser Dauer nicht möglich ist, im Superframe neue ModCods zu wählen, die nicht bereits vorhanden sind und sich dann, wenn ein vorher festgelegter Superframe ausgewählt ist, das Verarbeiten wie in der Situation des statischen Abbildens gestaltet, da die Zuweisung von ModCod zu einem Zeitschlitz für einen ausgewählten Superframe statisch ist und dynamisch nicht geändert werden kann, wenn der Burst-Zeitplan aufgebaut ist, dass das Abbilden von ModCods in die Zeitschlitze von Superframes mittels einer Architektur vorgenommen wird, die bei Anwendung des statischen Abbildens mittels eines speziellen Abbildungsalgorithmus die Kapazität der Superframes unter Verwendung von Kapazität in einem niedrigeren ModCod anstelle eines höheren angeforderten ModCods ausnutzt, wobei ein niedrigerer ModCod eine niedrigere Datenübertragungsrate als ein höherer angeforderter ModCod aufweist, und die bei Anwendung des halbdynamischen Abbildens den gleichen Abbildungsalgorithmus wie beim statischen Abbilden anwendet, jedoch mit dem Unterschied, dass der tatsächlich für die Übertragung genutzte Superframe aus einem Satz von vorher festgelegten, an die Übertragungskanaleigenschaften anpassbaren Superframes ausgewählt werden kann, dass die Schaffung des Burst-Zeitplans die Randbedingung berücksichtigt, dass keine Zeitschlitzzuweisung in verschiedenen Trägern zur gleichen Zeit zur Vermeidung einer Parallelübertragung zulässig ist, und dass schließlich der Übertragungsburst-Zeitplan an alle Entitäten übertragen wird.

**2.** Verfahren nach Anspruch 1, **dadurch gekennzeichnet, dass** der Gesamtprozess der Zuteilung und Verteilung von Ressourcen in einer zentral angeordneten Überleiteinrichtung ausgeführt wird.

**3.** Verfahren nach Anspruch 1 oder 2, **dadurch gekennzeichnet, dass** der statische bzw. halbdynamische Ressourcenzuteilungsmanager alle eintreffenden, von den Entitäten ausgesendeten Anforderungen zur Zuteilung von Bandbreite verwaltet und der Zuteilungsprozess die die folgenden Eigenschaften und Forderungen beinhaltenden Informationen berücksichtigt:

   - Kanalzustand und optimaler ModCod der anfordernden Entität, die in einer Datenbank gespeichert sind, wobei der optimale ModCod derjenige ModCod ist, der zu den vorgegebenen Übertragungskanalbedingungen der anfordernden Entität passt;
   - von der Entität angeforderter Betrag der Bitrate oder des Bitvolumens und die Kategorie der Anforderung, die in einer Datenbank gespeichert ist;
   - QoS-Forderungen für jede Nachfrage, die in einer Datenbank gespeichert sind;
   - Maximierung des Durchsatzes und der Verbindungseffizienz;
   - Neutralität der Kanalzuteilung zwischen anfordernden Entitäten;
   - Minimierung der Rechenlast.

**4.** Verfahren nach einem der vorhergehenden Ansprüche, **dadurch gekennzeichnet, dass** die Architektur sowohl verschiedene Zeitschlitzlängen als auch verschiedene Symbolraten auf einem Träger innerhalb eines Superframes behandelt.

**5.** Verfahren nach einem der vorhergehenden Ansprüche, **dadurch gekennzeichnet, dass** der Ressourcenzuteilungsprozess (RA-Prozess; Resource Allocation) in "Zuteilungsrunden" eingeteilt ist.

**6.** Verfahren nach Anspruch 5, **dadurch gekennzeichnet, dass** am Anfang einer Zuteilungsrunde ein Ressourcenzuteiler eine Ressourcenanforderungstabelle (RRT; Resource Request Table) nach abgelaufenen ratenbasierten Anforderungen, abgekürzt RBDC(Rate Based Dynamic Capacity)-Anforderungen, oder volumenbasierten Anforderungen, abgekürzt VBDC(VBDC = Volume Based Dynamic Capacity)-Anforderungen, die bereits zugeteilt wurden, überprüft, dass abgelaufene Eingänge dann aus der Tabelle entfernt werden, wobei die Unterscheidung zwischen RBDC-Anforderungen und VBDC-Anforderungen erfolgt, um RBDC-Anforderungen, die gewöhnlich strengen Voraussetzungen in Hinsicht auf Verzögerung und Verzögerungsjitter unterliegen, den Vorzug gegenüber den VBDC-Anforderungen bei der später danach ausgeführten Verarbeitung zu geben, und dass am Beginn einer Zuteilungsrunde alle in der Ressourcenanforderungstabelle aufgelisteten Anforderungen verarbeitet werden.

**7.** Verfahren nach Anspruch 1, **dadurch gekennzeichnet, dass** der Ressourcenzuweisungsalgorithmus im Fall des statischen Superframes berücksichtigt, dass sowohl die Zeitschlitz- und Frequenzzuteilung als auch die ModCod-Zuweisung zu den Zeitbursts konstant ist.

**8.** Verfahren nach Anspruch 1 und 7, **dadurch gekennzeichnet, dass** alle eintreffenden Anforderungen zu Beginn der nächsten Zuteilungsrunde berücksichtigt werden und alle abgelaufenen RBDC-Anforderungen oder bereits bedienten VBDC-Anforderungen aus einer Ressourcenanforderungstabelle (RRT; Resource Request Table) entfernt werden, dass für jedes RCST-Endgerät (Return Channel via Satellite-Terminal) der optimale ModCod für den Kanalzustand zu der Zeit berechnet wird, zu der der Superframe durch das RCST-Endgerät verwendet wird, wobei der optimale ModCod derjenige ModCod ist, der zu den vorgegebenen Übertragungskanalbedingungen des anfordernden Endgeräts passt, dass dann, wenn die optimalen ModCods für alle Endgeräte bekannt sind, der Algorithmus überprüft, ob alle tatsächlich für die Übertragung genutzten ModCods im tatsächlich für die Übertragung genutzten Superframe überhaupt vorhanden sind, dass dann, wenn ein Endgerät eine Kanalbedingung entsprechend einem ModCod hat, der im statischen Superframe nicht vorhanden ist, der ModCod auf einen verfügbaren nächstniedrigen ModCod in Bezug auf den optimalen ModCod geändert wird.

**9.** Verfahren nach Anspruch 8, **dadurch gekennzeichnet, dass** beim weiteren Vorgehen bei der Ressourcenzuteilung ein Kompromiss geschlossen wird, bei dem eine Situation berücksichtigt wird, in der N Endgeräte Kapazitäten für die Übertragung der Symbole anfordern und alle Endgeräte einen Kanalzustand haben, der einem optimalen ModCod M entspricht und darüber hinaus die Kapazität $C_{SF,M}$ des Superframe-Übertragungsbursts für ModCod $M$ kleiner sein soll als die Summe aller angeforderten Kapazitäten $C_i$ gemäß der Funktion

$$C_{SF,M} < \sum_{1}^{N} C_i \ ,$$

wobei der optimale ModCod M derjenige ModCod ist, der zu den vorgegebenen Übertragungskanalbedingungen des anfordernden Endgeräts passt, und dass in einer solchen Situation manche Anforderungen in im Vergleich zum optimalen ModCod niedrigeren ModCod-Übertragungsbursts zugewiesen werden.

10. Verfahren nach Anspruch 9, **dadurch gekennzeichnet, dass** im Fall, dass keine Zeitschlitze in niedrigeren ModCods eine Anforderung vollständig bedienen können, die Anforderung verringert wird, um sicherzustellen, dass überhaupt zugewiesen wird, und um maximalen Gebrauch von der verfügbaren Kapazität zu machen.

11. Verfahren nach einem der vorhergehenden Ansprüche, **dadurch gekennzeichnet, dass** sichergestellt wird, dass keine anderen Anforderungen durch die Zuweisung einer Anforderung zu einem niedrigeren ModCod beeinträchtigt werden.

12. Verfahren nach einem der vorhergehenden Ansprüche, **dadurch gekennzeichnet, dass** in einem ersten Berechnungsschritt die ModCod-Umschaltung noch nicht angewendet wird, sondern überprüft wird, welche Anforderungen keine Kapazität in ihrem bevorzugten ModCod haben.

13. Verfahren nach Anspruch 12, **dadurch gekennzeichnet, dass** zu diesem Zweck der Ressourcenzuteilungsalgorithmus jede Anforderung einzeln zuweist, wobei eine Liste ("Schwarze Liste") alle Anforderungen verfolgt, die nicht zugewiesen werden können, weil es nicht genug Kapazität in den Übertragungsbursts für den vorteilhaft ausgewählten ModCod gibt, dass der Algorithmus eine Politik ausführt, die dem Zuweisen von Anforderungen mit dem bevorzugten ModCod zuerst Priorität gibt und die Kapazitätsbelegung für alle Anforderungen, die vorher nicht bedient werden konnten, optimiert, dass der zweite Berechnungsschritt nun jeder Anforderung aus der Kapazität der "Schwarzen Liste" niedrigere ModCods zuweist und dass der Algorithmus mit der Anforderung mit dem höchsten ModCod in der "Schwarzen Liste" startet, da hohe ModCods mehreren bestimmten niedrigeren ModCods zugewiesen werden können, aber niedrige ModCods höheren nicht.

14. Verfahren nach Anspruch 1, **dadurch gekennzeichnet, dass** bei der Auswahl des Halbdynamik-Superframes, der sich für die tatsächlichen Kanalbedingungen im Strahl am besten eignet, berücksichtigt wird, dass in Bezug auf den optimalen ModCod niedrigere ModCods immer zugewiesen werden können, höhere jedoch nicht, dass die Verteilung der angeforderten ModCod-Mengen dann mit den ModCod-Verteilungsstatistiken der verfügbaren Superframes verglichen wird, dass als nächstes für jeden ModCod überprüft wird, ob die angebotene Kapazität kleiner oder größer als die für diesen Superframe angeforderte Kapazität ist, dass aus dem Satz von Superframes, die wenigstens für einen ModCod mehr als die Kapazität oder so viel Kapazität haben wie angefordert, der Superframe mit der kleinsten Differenz zur Übertragung in der tatsächlich laufenden Runde ausgewählt wird, und sonst der Superframe mit der kleinsten Differenz zur Übertragung ausgewählt wird, unabhängig davon, ob die Differenz nach höheren oder niedrigeren ModCods geht, so dass mit diesem Algorithmus die Asymmetrie der ModCod-Zuweisung, niedriger ModCod kann zugewiesen werden, höherer ModCod nicht, für die halbdynamische Superframe-Auswahl beachtet wird.

15. Verfahren nach einem der vorhergehenden Ansprüche, **dadurch gekennzeichnet, dass** dann, wenn Überschusskapazität verfügbar ist, diese unter den aktiven Endgeräten verteilt wird, jedoch lediglich innerhalb des gleichen Trägers, um Träger-Hopping zu verhindern.

16. Verfahren nach Anspruch 15, **dadurch gekennzeichnet, dass** mögliche Algorithmen für die Verteilung von Überschusskapazität Combined-free-Demand-Assignment-Algorithmen oder Vorhersagebedarf-Zuweisungsalgorithmen enthalten.

17. Verfahren nach Anspruch 1, **dadurch gekennzeichnet, dass** dann, wenn es noch einige unbenutzte Verkehrsbursts gibt, diese als Überschusskapazität zugeteilt werden, um unerwartete Verkehrsschwankungen zu kompensieren.

18. Verfahren nach Anspruch 1, **dadurch gekennzeichnet, dass** die freien. Kapazitäten für unvorhergesehene Verkehrsbursts verwendet werden.

19. Verfahren nach einem der vorhergehenden Ansprüche, **gekennzeichnet durch** die Anwendung von Adaptive Coding and Modulation, abgekürzt ACM, als Schwundminderungstechnik, wodurch sich in Abhängigkeit von der tatsächlich gewählten Modulation und Codierung unter der Voraussetzung einer gleichen Bitratenmenge die Symbolmenge mit den Kanalbedingungen ändert.

20. Verwendung des Verfahrens zur Ressourcenzuteilung nach einem der vorhergehenden Ansprüche bei der mobilen Satellitenfunkkommunikation.

**Claims**

1. Method for resource allocation in an interactive wireless satellite network multimedia system comprising the allocation of time slots in an uplink channel which operates with the multi-frequency time division multiple access technique, abbreviated as MF-TDMA, by means of a resource allocation manager which manages all incoming requests sent by entities requesting transmission of data via the wireless satellite network to another entity or to a central transfer facility, for the allocation of bandwidths with consideration to information containing properties and requirements, and which calculates a burst schedule following this information, **characterized in that**, using the statically or semi-dynamically operated resource allocation manager, either a static or a semi-dynamic mapping of modulation and code rate sets, abbreviated as ModCods, into the time slots of super frames is performed, wherein, in static mapping, a ModCod is selected and mapped into the time slots of a super frame during the system start-up period and this mapping remains constant for a longer period of -> 10s during which period it is not possible to select new ModCods in the super frame that are not already present, and wherein, in semi-dynamic mapping, a set of super frames with different compositions of ModCods is defined and a super frame is selected from this set and the selected ModCod is mapped into the time slots of this super frame during the system start-up period and this mapping remains constant for a longer period of -> 10s during which period it is not possible to select new ModCods in the super frame that are not already present, and wherein, if a predetermined super frame is selected, the processing runs as in the static mapping situation, since the allocation of a ModCod to a time slot for a selected super frame is static and cannot be changed dynamically, when the burst schedule has been established, that mapping ModCods into the time slots of super frames is performed using an architecture which, when applying static mapping, utilizes - employing a special mapping algorithm - the capacity of the super frames by using capacity in a lower ModCod instead of a higher requested ModCod, wherein a lower ModCod has a lower data transmission rate than a higher requested ModCod, and which, when applying semi-dynamic mapping, employs the same mapping algorithm as in static mapping, however, with the difference that the super frame actually used for transmission can be selected from a set of predetermined super frames adaptable to the properties of the transmission channel, that establishing the burst schedule takes into consideration the marginal condition that a time slot allocation in different carriers at the same time is not allowed in order to avoid a parallel transmission, and that the transmission burst schedule is finally transmitted to all entities.

2. Method of claim 1, **characterized in that** the overall process of allocating and distributing resources is executed in a centrally arranged transfer facility.

3. Method of claim 1 or 2, **characterized in that** the static or semi-dynamic resource allocation manager manages all incoming requests emitted by the entities for the allocation of bandwidths and wherein the allocation process takes into account the information including the following properties and requirements:

   - channel condition and optimum ModCod of the requesting entity stored in a data base, the optimum ModCod being the ModCod that matches the given transmission channel conditions of the requesting entity;
   - amount of the bit rate or of the bit volume requested by the entity and the category of the request stored in a data base;
   - QoS requirements for each request, said requirements being stored in a data base;
   - maximization of the throughput and the link efficiency;
   - neutrality of the channel allocation among requesting entities;
   - minimization of computational burden.

4. Method of one of the preceding claims, **characterized in that** the architecture treats both different time slot lengths and different symbol rates on a carrier within a super frame.

5. Method of one of the preceding claims, **characterized in that** the resource allocation process (RA process) is divided into "allocation turns".

6. Method of claim 5, **characterized in that**, at the beginning of each allocation turn, a resource allocator checks a resource request table (RRT) for expired rate based dynamic capacity requests, abbreviated as RBDC, or volume based dynamic capacity requests, abbreviated as VBDC, which have already been allocated, that expired entries are then deleted from the table, where a distinction is made between RBDC requests and VBDC requests, so as to prefer RBDC requests, which generally are subject to strict requirements with respect to delay and delay jitter, over VBDC requests in the processing executed later on, and that, at the beginning of an allocation turn, all requests listed in the resource request table are processed.

7. Method of claim 1, **characterized in that**, for a static super frame, the resource allocation algorithm takes into account that both the time slot and frequency allocation and the ModCod allocation to the time bursts are constant.

8. Method of claims 1 and 7, **characterized in that** all incoming requests are taken into account at the beginning of the next allocation turn and all expired RBCD requests or VBCD requests already serviced are deleted from a resource request table (RRT), that, for each RCST terminal (Return Channel via Satellite Terminal), the optimum ModCod for the channel condition is calculated at the time at which the super frame is used by the RCST terminal, the optimum ModCod being the ModCod matching the predefined transmission channel conditions of the requesting terminal, that, when the optimum ModCods for all terminals are known, the algorithm then checks whether all ModCods actually used for transmission are at all present in the super frame employed for transmission, that, in the event a terminal has a channel condition corresponding to a ModCod not present in the static super frame, the ModCod is modified to an available next lower ModCod with respect to the optimum ModCod.

9. Method of claim 8, **characterized in that**, in the further process, a compromise is made in resource allocation that takes into account a situation in which N terminals request capacities for transmission of the symbols and all terminals present a channel condition corresponding to an optimum ModCod M and wherein, further, the capacity $C_{SF,M}$ of the super frame transmission burst for the ModCod M is to be smaller than the sum of all requested capacities $C_i$

according to the function $C_{SF,M} < \sum_1^M C_i,$ the optimum ModCod M being the ModCod matching the predefined transmission channel conditions of the requesting terminal, and that, in such a situation, some requests are allocated in ModCod transmission bursts that are lower when compared with the optimum ModCod.

10. Method of claim 9, **characterized in that** in the event that no time slots in lower ModCods can fully service a request, the request is reduced to ensure any allocation at all and to make maximum use of the available capacity.

11. Method of one of the preceding claims, **character-**

**ized in that** it is ensured that no other requests are adversely affected by the allocation of a request to a lower ModCod.

12. Method of one of the preceding claims, **characterized in that** the ModCod switching is not yet applied in a first calculation step, but it is checked which requests have no capacity in their preferred ModCod.

13. Method of claim 12, **characterized in that**, for this purpose, the resource allocation algorithm allocates each request individually, with a list ("blacklist") keeping track of all requests that could not be allocated for lack of capacity in the transmission bursts for the advantageously selected ModCod, that the algorithm executes a policy which gives first priority to the allocation of requests with the preferred ModCod and optimizes the capacity seizure for all requests that could not be serviced before, that the second calculation step now allocates lower ModCods to each request from the capacity of the "blacklist", and that the algorithm starts with the request having the highest ModCod in the "blacklist", since high ModCods can be allocated to a plurality of defined lower ModCods, but lower ones cannot be allocated to higher ones.

14. Method of claim 1, **characterized in that**, when selecting the semi-dynamic super frame best suited for the actual channel conditions in the beam, it is taken into consideration that lower ModCods can always be allocated with respect to the optimum ModCod, but higher ones cannot, that the distribution of the requested ModCod amounts is then compared with the ModCod distribution statistics of the available super frames, that, next, it is checked for each ModCod whether the capacity offered is smaller or larger than the capacity requested for this super frame, that, from the set of super frames having a capacity for at least one ModCod more than requested or having just the capacity requested, the super frame with the smallest difference is selected for transmission in the current turn, and, otherwise, the super frame with the smallest difference is selected for transmission irrespective of whether the difference tends towards higher or lower ModCods, so that with this algorithm, the asymmetry of ModCod allocation - low ModCod can be allocated, higher ModCod cannot - is observed for the semi-dynamic super frame selection.

15. Method of one of the preceding claims, **characterized in that**, if excess capacity is available, the same is distributed among the active terminals, but only within the same carrier, in order to avoid carrier hopping.

16. Method of claim 15, **characterized in that** possible algorithms for the distribution of excess capacities include combined free demand assignment algorithms or prediction demand allocation algorithms.

17. Method of claim 1, **characterized in that**, if there still are some unused traffic bursts, these are allocated as excess capacity, to compensate for unexpected traffic variations.

18. Method of claim 1, **characterized in that** the free capacities are used for unexpected traffic bursts.

19. Method of one of the preceding claims, **characterized by** the application of adaptive coding and modulation, abbreviated as ACM, as a loss reduction technique, whereby the symbol amount changes with the channel conditions as a function of the actually selected modulation and coding, provided the bit rate amount is the same.

20. Use of the method for resource allocation of one of the preceding claims in mobile wireless satellite communication.

## Revendications

1. Procédé destiné à l'attribution de ressources dans un système multimédia interactif en réseau radio par satellite comprenant l'attribution des intervalles de temps dans une liaison montante opérant selon la technique Multi-Frequency Time Division Multiple Access, abrégé par MF-TDMA, moyennant un gestionnaire d'attribution de ressources gérant toutes les requêtes arrivantes émises par des entités demandant une transmission de données á travers le réseau radio par satellite à d'autres entités ou un dispositif central de transfert, pour attribuer des largeurs de bande tout en prenant en compte des informations contenant des propriétés et des demandes, et qui calcule un horaire de rafale soumis auxdites informations, **caractérisé en ce que,** moyennant le gestionnaire d'attribution de ressources opéré statiquement ou semi-dynamiquement, il est effectué un mappage (mapping) soit statique, soit semi-dynamique de taux de modulation et de codage, abrégé par ModCods, dans les intervalles de temps de super-trames,
dans lequel, lors d'un mappage statique, un ModCod est choisi et mappé dans les intervalles de temps d'une super-trame pendant la phase de démarrage du système et ce mappage reste constant pour une durée allongée de -> 10s, pendant quelle durée il n'est pas possible de choisir des autres ModCods dans la super-trame qui n'existent pas déjà, et dans lequel, lors d'un mappage semi-dynamique, un groupe de super-trames avec différentes compositions de ModCods est défini et une super-trame est choisie dans ce groupe et, pendant la phase de démarrage du système, un ModCod choisi est mappé dans les intervalles de temps de cette super-trame et ce mappage reste constant pour une durée allongée de -> 10s, pendant quelle durée il n'est pas possible de choisir des autres ModCods dans la super-trame, qui ne sont pas déjà présent, et le traîtement se déroule, si une super-trame prédéterminée est choisie, comme dans la situation d'un mappage statique, parce que l'attribution d'un ModCod à un intervalle de temps pour une super-trame choisie est statique et ne peut pas être changé dynamiquement si l'horaire de rafale est établi,
que le mappage de ModCods dans les intervalles de temps de super-trames est effectué moyennant une architecture qui, en cas de l'application du mappage statique, se sert d'un algorithme spécial de mappage pour utiliser la capacité des super-trames en utilisant de la capacité d'un ModCod inférieur au lieu d'un ModCod supérieur requit, un ModCod inférieur ayant un taux de transmission de données inférieur à celui d'un ModCod supérieur requit, et qui, lors de l'application du mappage semi-dynamique, utilise le même algorithme de mappage que lors du mappage statique, mais avec la différence que la super-trame actuellement utilisée pour la transmission peut être choisie dans un groupe de super-trames prédéterminées adaptables aux propriétés du canal de transmission, que l'établissement de l'horaire de rafale prend en compte la condition marginale qu'une attribution des intervalles de temps dans différents porteurs au même temps n'est pas admissible, et que, finalement, l'horaire de rafale de transmission est transmit à toutes les entités.

2. Procédé selon la revendication 1, **caractérisé en ce que** le procès global d'attribution et distribution de ressources est effectué dans un dispositif de transfert disposé de manière centrale.

3. Procédé selon la revendication 1 ou 2, **caractérisé en ce que** le gestionnaire d'attribution de ressources statique ou semi-dynamique gère toutes les requêtes arrivantes émises par les entités pour attribuer des largeurs de bande et que le procès d'attribution prend en compte les informations contenant les propriétés et demandes suivantes:

  - l'état du canal et ModCod optimal de l'entité requérante, stockés dans une base de données, le ModCod optimal étant le ModCod correspondant aux conditions prédéterminées du canal de transmission de l'entité requérante;
  - la magnitude du débit binaire ou de la quantité binaire requise par l'entité et la catégorie de la requête, qui est stockée dans une base de données;
  - des demandes QoS pour chaque requête, qui sont stockées dans une base de données;

- la maximalisation du débit et de l'efficacité de la liaison;
- la neutralité de l'attribution de canaux parmi les entités;
- la minimalisation de la complexité des calculs.

4. Procédé selon l'une quelconque des revendications précédentes, **caractérisé en ce que** ladite architecture traite des longueurs différentes des intervalles de temps aussi que des taux différents de symboles sur un porteur dans une super-trame.

5. Procédé selon l'une quelconque des revendications précédentes, **caractérisé en ce que** le procès d'attribution de ressources (RA; Resource Allocation) est divisé en "tours d'attribution".

6. Procédé selon la revendication 5, **caractérisé en ce qu'**au commencement d'un tour d'attribution, un dispositif d'attribution de ressource examine un tableau de requêtes de ressources (RRT; Resource Request Table) pour des requêtes expirées, basées sur le débit, abrégé par requêtes RBDC (Rate Based Dynamic Capacity), ou pour des requêtes basées sur la quantité, abrégé par requêtes VBDC (Volume Based Dynamic Capacity), déjà attribuées, que des entrées expirées sont ensuite éliminées du tableau, la différentiation entre requêtes RBDC et requêtes VBDC étant faite pour préférer les requêtes RBDC, généralement soumises à des conditions préalables strictes par rapport au retard et au scintillement du retard, aux requêtes VBDC lors du traîtement effectué plus tard, et qu'au commencement d'un tour d'attribution toutes les requêtes listées dans ledit tableau de requêtes de ressources sont traitées.

7. Procédé selon la revendication 1, **caractérisé en ce qu'**en cas d'une super-trame statique, l'algorithme d'attribution de ressources prend en compte que l'attribution des intervalles de temps et des fréquences aussi que l'attribution des ModCods aux rafales de temps est constante.

8. Procédé selon les revendications 1 et 7, **caractérisé en ce que** toutes les requêtes arrivantes sont prises en compte au commencement du prochain tour d'attribution et que toutes les requêtes RBDC déjà expirées ou les requêtes VBDC déjà servies sont éliminées d'un tableau de requêtes de ressources (RRT; Resource Request Table), que pour chaque terminal RCST (Return Channel via Satellite Terminal) le ModCod optimal pour l'état de canal est calculé au moment la super-trame est utilisée par ledit terminal RCST, le ModCod optimal étant le ModCod correspondant aux conditions prédéterminées du canal de transmission du terminal requérant, que, lorsque les ModCods optimaux pour tous terminaux sont connus, l'algorithme vérifie si tous les ModCods actuellement utilisés pour la transmission sont présent dans la super-trame actuellement utilisée pour la transmission, que, lorsqu'un terminal remplit une condition de canal correspondant à un ModCod qui n'est pas présent dans la super-trame statique, le ModCod est transformé en un ModCod disponible qui est l'inférieur direct du ModCod optimal.

9. Procédé selon la revendication 8**, caractérisé en ce que** dans le déroulement du procès, on fait un compromis lors de l'attribution des ressources dans lequel on prend en compte une situation dans laquelle N terminaux requièrent des capacités pour la transmission des symboles et tous terminaux présentent un état de canal correspondant à un ModCod M optimal, et, d'ailleurs, la capacité $C_{SF,M}$ de la rafale de transmission de la super-trame pour le ModCod M doit être inférieure à la somme de toutes capacités requises $C_i$, suivant la fonction $C_{SF,M} < \sum_1^N C_i$, le ModCod optimal étant le ModCod correspondant aux conditions prédéterminées du canal de transmission du terminal requérant, et que, dans une telle situation, quelques requêtes sont attribuées à rafales de transmission de ModCods inférieures au ModCod optimal.

10. Procédé selon la revendication 9, **caractérisé en ce que** dans le cas où aucun intervalle de temps dans des ModCods inférieurs ne peut complètement servir une requête, la requête est réduite afin de garantir une attribution du tout, et afin d'utiliser au maximum la capacité disponible.

11. Procédé selon l'une quelconque des revendications précédentes, **caractérisé en ce qu'**il est assuré qu'aucune autre requête n'est affectée par l'attribution d'une requête à un ModCod inférieur.

12. Procédé selon l'une quelconque des revendications précédentes, **caractérisé en ce que**, dans une première étape de calcul, le changement des ModCods n'est pas encore appliqué, mais qu'il est examiné quelles requêtes n'ont pas de capacité dans leur ModCod préféré.

13. Procédé selon la revendication 12, **caractérisé en ce qu'**à ce fin, l'algorithme d'attribution de ressources attribue chaque requête individuellement, une liste ("liste noire") suit toutes requêtes qui ne peuvent pas être attribué à cause d'un manque de capacité dans les rafales de transmission pour le ModCod choisi avantageusement, que l'algorithme poursuit une politique qui donne la priorité à l'attribution de requêtes avec le ModCod préféré et optimalise l'occupation de capacité pour toutes les requêtes qui ne pourraient pas être servi auparavant, que la deuxième étape de calcul maintenant attribue des Mod-Cods inférieurs à chaque requête de la capacité de la "liste noire", et que l'algorithme commence avec la requête ayant le ModCod le plus supérieur dans la "liste noire", parce que des ModCods supérieurs peuvent être attribué à certains ModCods inférieurs, mais des ModCods inférieurs ne peuvent pas être attribué à des ModCods supérieurs.

14. Procédé selon la revendication 1, **caractérisé en ce que**, lors de la sélection de la super-trame semi-dynamique la plus apte pour les conditions de canal actuelles dans le rayon, il est pris en compte que, par rapport au ModCod optimal, des ModCods inférieurs peuvent être attribué toujours, mais non pas les ModCods supérieurs, que la distribution des quantités de ModCods requises est alors comparée aux statistiques de distribution de ModCods des super-trames disponibles, qu'après, il est vérifié pour chaque ModCod si la capacité offerte est inférieure ou supérieure à la capacité requise pour cette super-trame, que, dans le groupe de super-trames ayant une capacité pour au moins un ModCod de plus que la capacité requise ou ayant juste la même capacité que la capacité requise, la super-trame avec la plus petite différence est choisie pour la transmission, au mépris de la tendance de la différence vers les ModCods supérieurs ou inférieurs, de manière que, par cet algorithme, on respecte l'asymétrie de l'attribution de ModCods - un ModCod inférieur peut être attribué, un ModCod supérieur ne peut pas être attribué - dans la choix de la super-trame semi-dynamique.

15. Procédé selon l'une quelconque des revendications précédentes, **caractérisé en ce que**, si un surplus de capacité est disponible, ce surplus est distribué parmi les terminaux actifs, mais seulement dans le même porteur, afin d'empêcher des sauts de porteur.

16. Procédé selon la revendication 15**, caractérisé en ce que** des algorithmes possibles à utiliser pour la distribution des surplus de capacité comprend des algorithmes du type "Combined-free-Demand-Assignment" ou des algorithmes d'attribution de demande de prédiction.

17. Procédé selon la revendication 1, **caractérisé en ce que** s'il y a encore des rafales de trafic non-utilisées, ces rafales sont attribuées come surplus de capacité afin de compenser des variations de trafic inattendues.

18. Procédé selon la revendication 1, **caractérisé en ce que** les capacités libres sont utilisées pour des rafales de trafic inattendues.

19. Procédé selon l'une quelconque des revendications précédentes, **caractérisé par** l'application de codage et modulation adaptive, abrégée par ACM, comme technique de réduction d'évanouissement, moyennant quoi la quantité de symboles se change avec les conditions des canaux en fonction de la modulation et le codage actuellement choisis, sous la prémisse d'un débit binaire égal.

20. Utilisation du procédé pour l'attribution de ressources selon l'une quelconque des revendications précédentes dans le domaine de la communication mobile en réseau radio par satellite.

Fig.1

Fig.2

Frequenz

400 Symbole

| | | | | | | | |
|---|---|---|---|---|---|---|---|
| Schlitz 1<br>1 ms | Schlitz 2<br>1 ms | Schlitz 3<br>1 ms | Schlitz 4<br>1 ms | Schlitz 5<br>1 ms | Schlitz 6<br>1 ms | Schlitz 7<br>1 ms | Schlitz 8<br>1 ms |

4 MS/s

1 MS/s

Schlitz 9 - 4 ms          Schlitz 10 - 4 ms

1 MS/s

Schlitz 11 - 4 ms          Schlitz 12 - 4 ms

Zeit

400 Symbole

Anforderung
A

2600 Symbole = 6,5 Schlitze

Anforderung
B

900 Symbole = 2,25 Schlitze

Anforderung
C

750 Symbole = 1,875 Schlitze

Fig.3

Frequenz

Zeit

☒ ModCod M    ▥ ModCod K    ▦ ModCod H

▨ ModCod L    ▤ ModCod I    ⊞ ModCod G

# Fig.4

Frequenz

SF_4
SF_3
SF_2
SF_1

Zeit

# Fig.5

EP 1 860 794 B1

Neue
Zuteilungsrunde

Senden TBTP

Suchen
abgelaufener RBDC-
Anforderungen und
deren Entfernen

Prüfen jeder Anforderung nach
Verfügbarkeit des
angeforderten ModCods

Wenn ein bevorzugter ModCod
nicht verfügbar ist, Zuteilen
eines niedrigeren

Wenn kein niedrigerer ModCod
zugeteilt werden kann, ist es
nicht möglich, die Anforderung
zu bedienen

Anforderungs
-tabelle

Prüfen nach
Verfügbarkeit von
Überschuss-Schlitzen.
Wenn noch
Zeitschlitze verfügbar
sind, deren Zuweisung
gemäß einem
Überschusskapazitätsverteilungsalgorithmus
auf alle Endgeräte

Erste Zuweisungsrunde:
1. Zuweisen aller Anforderungen, soweit
möglich
2. Setzen der Anforderungen, die nicht
zugeteilt werden können, in die "Liste
unzugewiesener Anforderungen"

Tabelle
unzugewiesener
Anforderungen

Prüfen nach System-
Stand-by-
Anforderungen. Wenn
genug Raum für eine
Stand-by-Anforderung
verfügbar ist, Mitteilung
an Systemalgorithmus
diese anzunehmen

Zweite Zuweisungsrunde:
Versuchen, alle
"unzugewiesenen
Anforderungen" einem
niedrigeren ModCod
zuzuweisen

Fig.6

## Erzwungene korrekte ModCod-Zuweisung

Frequenz

1MS/s

2MS/s

4MS/s
Anforderung C₁  ·  An-ford. C₃  ·  Anforderung C₂  ·  An-ford. C₄

Zeit

☑ ModCod M   ▦ ModCod K   ▦ ModCod H

▦ ModCod L   ▤ ModCod I   ▦ ModCod G

(1 MS = 1 Million Symbole)

## Zugelassene ModCod-Umschaltung

Frequenz

1MS/s

2MS/s
Anforderung C₃   ·   Anforderung C₄

4MS/s
Anforderung C₁   ·   Anforderung C₂

Zeit

☑ ModCod M   ▦ ModCod K   ▦ ModCod H

▦ ModCod L   ▤ ModCod I   ▦ ModCod G

(1 MS = 1 Million Symbole)

# Fig.7

Transparenter
oder
regenerativer
Satellit

7

DVB-RCS

Klarer Himmel

VoIP

DVB-S2

11

RCS-Endgerät

DVB, Video on
Demand,...

Wolkiger Kanal

8

Regnerischer
Kanal

RCS-Endgerät

RCS-Endgerät

9

10

Überleiteinrichtung
(Gateway)

VoIP

Internet, FTP, email,...

VoIP

Fig.8

EP 1 860 794 B1

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- FR 2874147 A1
- EP 1169836 B1
- EP 1429473 A2
- US 2004252725 A1
- US 2007097852 A1

**In der Beschreibung aufgeführte Nicht-Patentliteratur**

- **J. PARK ; U. SAVAGAONKAR ; E. CHONG ; H. SIEGEL ; S. JONES.** Allocation of QoS connection in MF-TDMA Satellite Systems: A Two-Phase Approach. *IEEE Transactions on Vehicular Technology,* Januar 2005, vol. 54 (1
- **C. Párraga Niebla ; C. Kissling.** Delay Compensation Strategies for an Efficient Radio Resource Management in DVB-S2 Systems. *Wireless Communication Systems,* 2005